# EUROPÄISCHE PATENTSCHRIFT

(11) **EP 4 257 832 B1**
(45) Veröffentlichungstag und Bekanntmachung des Hinweises auf die Patenterteilung: **08.04.2026**
(21) Anmeldenummer: 23192833.4
(22) Anmeldetag: 24.01.2017
(51) Int. Cl.: F16B 35/00, B60Q 1/04, F16B 5/02

(54) **JUSTAGEELEMENT ZUM POSITIONIEREN EINES ANBAUTEILS**
ALIGNMENT ELEMENT FOR POSITIONING AN ATTACHMENT PART
ÉLÉMENT D'ALIGNEMENT POUR POSITIONNER UNE PIÈCE DE MONTAGE

(30) Priorität: 29.01.2016 DE 102016101634
(43) Veröffentlichungstag der Anmeldung: 11.10.2023
(62) Teilanmeldung aus: 17701470.1
(73) Patentinhaber: VOLKSWAGEN AG, 38440 Wolfsburg (DE); Böllhoff Verbindungstechnik GmbH, 33649 Bielefeld (DE)
(72) Erfinder: HÜBNER, Torsten, 38461 Danndorf (DE); BORSUTZKY, Andreas, 38165 Lehre (DE); JODELEIT, Martin, 33617 Bielefeld (DE)
(74) Vertreter: Gulde & Partner

(56) Entgegenhaltungen:
- EP-B1- 2 442 945
- FR-A1- 2 298 059

## Beschreibung

Die Erfindung betrifft ein Justageelement zum Positionieren eines Anbauteils an einem Strukturteil eines Fahrzeugs. Ferner betrifft die Erfindung eine Beleuchtungsanordnung mit dem Justageelement, ein Verfahren zur Montage einer Beleuchtungsvorrichtung in einem Fahrzeug sowie ein Kraftfahrzeug mit der Beleuchtungsanordnung.

Es ist beispielsweise in der Endmontage von Fahrzeugen erforderlich, jene Bauteile und Baugruppen, welche die Oberfläche des Fahrzeugs bilden, relativ zueinander zu positionieren und zu orientieren. Dieser Vorgang wird Justage genannt und erfolgt bei vielen Fügevorgängen entlang der gesamten Wertschöpfungskette des Fahrzeugs.

Es gibt Baugruppen, so zum Beispiel Beleuchtungsvorrichtungen, welche Bestandteil der Oberfläche des Fahrzeugs werden. Eine solche Beleuchtungsvorrichtung kann beispielsweise eine Scheinwerferbaugruppe oder eine Rückleuchte sein, die im Zuge der Montage in einem Aufnahmeabschnitt der Oberfläche des Fahrzeugs angeordnet wird. Hier gilt es, enge Toleranzen, unter anderem hinsichtlich von Spaltmaßen zwischen der Scheinwerferbaugruppe oder Rückleuchte und angrenzenden Verkleidungsteilen der Oberfläche des Fahrzeugs einzuhalten. Enge Toleranzen bestehen hier auch in der Komplettierung der Oberfläche des Fahrzeugs durch die Oberfläche der Scheinwerferbaugruppe oder Rückleuchte. Ein zu großer Versatz würde hier zu einer wahrnehmbaren Stufe innerhalb der Oberfläche des Fahrzeugs führen.

Dem Fachmann sind bereits vielfältige technische Lösungen bekannt, welche den vorangehend beschriebenen Anforderungen Sorge tragen. So ist beispielsweise bekannt, die Beleuchtungsvorrichtung in dem Aufnahmeabschnitt der Oberfläche des Fahrzeugs anzuordnen und die Beleuchtungsvorrichtung an einem Strukturteil des Fahrzeugs zu befestigen. Für die nachträgliche Justage können dann beispielsweise eine oder mehrere Justageelemente vorgesehen sein, die die Beleuchtungsvorrichtung an definierten Punkten auf Abstand zu der Oberfläche des Fahrzeugs halten. Durch Einstellung der Justageelemente kann die Beleuchtungsvorrichtung dann relativ zu der Oberfläche des Fahrzeugs verlagert werden, bis der gewünschte Justagezustand hergestellt ist.

Dabei ist es erforderlich, dass die Justageelemente an den definierten Punkten an dem Strukturteil des Fahrzeugs zur Abstützung der Beleuchtungsvorrichtung anliegen. Als problematisch erweist es sich, dass es in diesen Punkten häufig aufgrund der permanenten Krafteinleitung und der resultierenden Dauerbeanspruchung des Strukturteils zu einer lokalen Beschädigungen des selbigen kommt. Als unerwünschtes Resultat treten hier Korrosionseffekte auf, welche beispielsweise auf eine Beschädigung einer auf dem Strukturteil aufgetragenen schützenden Lackoberfläche zurückzuführen sind.

Die DE 87 13 935 U1 offenbart eine Vorrichtung für die verstellbare Verbindung eines Fahrzeugscheinwerfers mit einem Tragteil. Diese verfügt über einen Halteflansch, der in einen Ausschnitt der Tragwand einbringbar ist.

Weiterhin offenbart die DE 199 26 842 A1 eine Fahrzeugleuchte mit verstellbarer Befestigung. Hierbei wird ein Gewindebolzen durch eine Bohrung in einer Fahrzeugkarosserie geführt und kann so die Fahrzeugleuchte auf Abstand zu der Fahrzeugkarosserie halten.

Weiterhin ist in der EP 0 393 353 A1 ein Scheinwerfer für Fahrzeuge beschrieben. Ein Reflektor des Scheinwerfers ist mit einem Aufnahmeteil verstellbar verbunden. Die Verbindung mit dem Aufnahmeteil wird über zwei Verbindungsteile hergestellt, welche jeweils in eine Bohrung des Aufnahmeteils eingebracht sind und dadurch in diesem befestigt sind.

Die DE 101 21 114 A1 beschreibt eine Fahrzeugleuchte mit verstellbarer Befestigung. Die Verstellbarkeit ist hier über einen Gewindebolzen gegeben, der in Richtung der Verstellbarkeit an einer Fahrzeugstruktur anlegbar ist.

Die DE 20 2007 016 945 U1 beschreibt ein weiteres Verstellelement zur positionierbaren Befestigung einer Komponente, beispielsweise einer Fahrzeugleuchte, im Raum.

Schließlich ist in der DE 20 2005 008 060 U1 eine Befestigungsanordnung zum verstellbaren Befestigen eines Gehäuseteils an einem Trägerteil mit der Möglichkeit eines Ausgleichs von Toleranzen offenbart. Die Anordnung umfasst eine Hülse sowie ein bolzenförmiges Befestigungselement, das in die Hülse einschraubbar ist. Die Anordnung weist ferner ein Gehäuseteil mit Rippen auf, in welche ein Kopf der Hülse eingerastet ist und bei der die Hülse und das Gehäuseteil in Längsrichtung einen steifen Verbund bilden.

FR 2 298 059 A1 offenbart ein Justageelement zum Positionieren eines Anbauteils an einem Strukturteil eines Fahrzeugs. Dieses umfasst einen Justageabschnitt und einen Anlageabschnitt, wobei der Anlageabschnitt beweglich an dem Justageabschnitt gelagert ist und über eine Gelenkverbindung an dem Justageabschnitt befestigt ist. Der Anlageabschnitt ist derart beweglich an dem Justageabschnitt gelagert, dass die Stützfläche gegenüber dem Justageabschnitt verschwenkbar ist.

EP 2 442 945 B1 offenbart ein weiteres Justageelement zum Positionieren eines Anbauteils an einem Strukturteil eines Fahrzeugs. Dieses umfasst einen Justageabschnitt und einen Anlageabschnitt, wobei der Anlageabschnitt beweglich an dem Justageabschnitt gelagert ist und über eine Gelenkverbindung an dem Justageabschnitt befestigt ist. Der Anlageabschnitt ist derart beweglich an dem Justageabschnitt gelagert, dass die Stützfläche gegenüber dem Justageabschnitt verschwenkbar ist.

Der Erfindung liegt nun die Aufgabe zugrunde, ein Justageelement zur Positionierung eines Anbauteils an einem Strukturteil eines Fahrzeugs zu schaffen, bei der das Strukturteil keine schädigende Beeinflussung durch die Justage des Anbauteils erfährt.

Die Aufgabe wird durch die Gegenstände der Patentansprüche 1,3,5 und 6 gelöst. Weitere bevorzugte Ausgestaltungen der Erfindung ergeben sich aus den übrigen, in den Unteransprüchen genannten Merkmalen.

Ein erster Aspekt der vorliegenden Erfindung betrifft ein Justageelement zum Positionieren eines Anbauteils an einem Strukturteil eines Fahrzeugs mit einem Justageabschnitt, der mit dem Anbauteil verbindbar ist, sowie einem Anlageabschnitt. Der Anlageabschnitt ist beweglich an dem Justageabschnitt gelagert und weist eine Stützfläche auf, die an das Strukturteil des Fahrzeugs anlegbar ist. Der Anlageabschnitt ist über eine Gelenkverbindung an dem Justageabschnitt befestigt.

Der Justageabschnitt ermöglicht eine Einstellung geometrischer Eigenschaften des Justageelements, wie beispielsweise dessen Länge. Das Anbauteil im Sinne der Erfindung kann jedes beliebige Abtauteil sein, das zur Vervollständigung des Fahrzeugs benötigt wird. Insbesondere betrifft dies Anbauteile, die für einen Bereich der Oberfläche des Fahrzeugs vorgesehen sind. Besonders hervorzuheben sind im Zusammenhang mit der Erfindung Anbauteile in Form von Beleuchtungsvorrichtungen. Das Strukturteil im Sinne der Erfindung kann entsprechend jedes beliebige Strukturteil sein, welches geeignet ist, als Anlage, Referenz oder ähnliches zwecks Positionierung des Anbauteils zu fungieren. Insbesondere betrifft dies Strukturteile in Bereichen dicht unterhalb der Oberfläche des Fahrzeugs. Besonders hervorzuheben sind im Zusammenhang mit der Erfindung Strukturteile in Form von Karosserieteilen.

Das erfindungsgemäße Justageelement bietet den Vorteil, dass etwaige über das Justageelement auf das Strukturteil übertragende Kräfte - aufgrund der Stützfläche - als Flächenlast auf das Strukturteil übertragen werden. Dies schont das Material des Strukturteils und vermeidet Verschleiß infolge großer Dauerbeanspruchung. Somit ist eine wesentliche Ursache für Korrosionsschäden behoben. Da der die Stützfläche aufweisende Anlageabschnitt beweglich an dem Justageabschnitt gelagert ist, ist vorteilhaft gewährleistet, dass dieser vollständig an das Strukturteil anliegen kann. Dabei ist die relative Ausrichtung des Justageelements und des Strukturteils unerheblich. Dies wird mit anderen Worten ausgedrückt erreicht, indem der Anlageabschnitt derart beweglich an dem Justageabschnitt gelagert ist, dass die Stützfläche gegenüber dem Justageabschnitt verschwenkbar ist. Weiterhin mit anderen Worten ausgedrückt lässt die Beweglichkeit zwischen dem Anlageabschnitt und dem Justageabschnitt eine Positionierung der Stützfläche gegenüber dem Justageabschnitt in einer Weise zu, dass ein Normalenvektor der Stützfläche gegenüber einer Achse, beispielsweise Längsachse, des Justageabschnitts unterschiedliche Winkelbeziehungen einnehmen kann. Somit ist auch bei von sich aus verwundenen oder mit Herstellungstoleranzen behafteten Strukturteilen eine flächige Anlage der Stützfläche gewährleistet. Über den Justageabschnitt ist ein Abstand zwischen dem Strukturteil dem Anbauteil vorteilhaft flexibel, sicher und genau einstellbar. So ist es beispielsweise möglich, die Stützfläche des Anlageabschnitts des Justageelements zunächst unter Vorspannung an dem Strukturteil zum Anliegen zu bringen und dann den Justageabschnitt einzustellen und so beispielsweise die Länge des Justageelements zu verändern, um den gewünschten Justagezustand zwischen Anbauteil und Strukturteil herzustellen.

Die Gelenkverbindung kann auf eine hohe Steifigkeit ausgelegt werden. Somit können, wenn die Stützfläche an dem Strukturteil anliegt, hohe Kräfte von dem Strukturteil über die Stützfläche und den Anlageabschnitt auf den Justageabschnitt und dann auf das Anbauteil übertragen werden, ohne dass das Justageelement nachgibt. Das Justageelement wird so signifikant resistenter gegen thermische und mechanische Umwelteinflüsse, wie Vibrationen oder Abwärme. In dieser Ausgestaltung können der Justageabschnitt und der Anlageabschnitt mit anderen Worten auch als serielle Kinematik bezeichnet werden. Die Beweglichkeit des Anlageabschnitts gegenüber dem Justageabschnitt kann bei einer Gelenkverbindung, bezogen auf die jeweiligen Massenschwerpunkte dieser Elemente, auch als räumliche Verschiebbarkeit des Anlageabschnitts gegenüber dem Justageabschnitt betrachtet werden, da sich die relative Lage der beiden Massenschwerpunkte zueinander ändern lässt. Somit kann sich die oben beschriebene Verschwenkung der Stützfläche gegenüber dem Justageabschnitt beispielsweise aus der Verschiebung des Anlageabschnitts insgesamt ergeben.

In weiter bevorzugter Ausgestaltung der Erfindung ist vorgesehen, dass die Gelenkverbindung eine Gelenkkörperaufnahme und einen dazu komplementären gleitfähigen Gelenkkörper umfasst.

Die Gelenkverbindung kann beispielsweise eine Kugelgelenkverbindung sein. Der gleitfähige Gelenkkörper ist dann beispielsweise eine Gelenkkugel und die Gelenkkörperaufnahme beispielsweise eine Gelenkpfanne. Derartige Gelenkverbindungen sind vorteilhaft einfach herstellbar und bieten gleichzeitig ein großes Maß an Beweglichkeit. Durch Wahl geeigneter Werkstoffe, wie beispielsweise Kunststoff, kann zudem gewährleistet werden, dass eine zusätzliche Schmierung entfallen kann und die Gelenkverbindung einfach und günstig herstellbar ist.

Erfindungsgemäß ist vorgesehen, dass der Justageabschnitt eine mit dem Anbauteil verbindbare Hülse und einen gegenüber der Hülse justierbaren Stützkörper umfasst, an dem der Anlageabschnitt gelagert ist.

Dies bietet den Vorteil, dass das Justageelement sehr einfach aufgebaut ist und gleichzeitig alle nötigen Funktionen ermöglicht.

Ferner ist erfindungsgemäß vorgesehen, dass die Hülse ein Innengewinde aufweist und der Stützkörper ein Außengewinde aufweist.

Die ermöglicht vorteilhaft eine einfache, genaue und sichere Justage der Hülse und des Stützkörpers relativ zueinander.

Erfindungsgemäß ist ferner vorgesehen, dass die Hülse formschlüssig und kraftschlüssig mit dem Anbauteil verbindbar ist. Hierzu weist die Hülse ein Außengewinde auf.

Somit kann vorteilhaft eine sichere Verbindung zwischen Hülse und Anbauteil sichergestellt werden. Bei der beanspruchten Schraubenverbindung ist die Verbindung zudem lösbar und somit flexible im Ersatzteilfall.

Ein zweiter Aspekt der Erfindung betrifft eine Beleuchtungsanordnung für ein Fahrzeug, umfassend wenigstens ein erfindungsgemäßes Justageelement. In diesem Fall ist das oben referenzierte Anbauteil eine Beleuchtungsvorrichtung für ein Fahrzeug. Das Strukturteil des Fahrzeugs, an welchem die Beleuchtungsvorrichtung positioniert wird, kann hier beispielsweise ein Karosserieteil aber auch jeder andere geeignete Strukturteil sein.

Das erfindungsgemäße Beleuchtungsanordnung bietet Vorteile, die auf die oben beschriebenen Vorteile des erfindungsgemäßen Justageelements gestützt sind. So werden etwaige über das Justageelement auf das Strukturteil übertragenden Kräfte, auf Grund der Stützfläche des Justageelements, als Flächenlast auf das Strukturteil übertragen. Dies schont das Material des Strukturteils und vermeidet Verschleiß infolge von Dauerbeanspruchung. Somit ist eine wesentliche Ursache für Korrosionsschäden behoben. Da der die Stützfläche aufweisende Anlageabschnitt beweglich an dem Justageabschnitt gelagert ist, ist vorteilhaft gewährleistet, dass dieser vollständig an dem Strukturteil anliegen kann. Dabei ist die relative Ausrichtung von Justageelement und Strukturteil unerheblich. Dies ist insbesondere bei der Montage von Fahrzeugen von Bedeutung. Die Beleuchtungsvorrichtung muss hier unter Einhaltung eng bemessener Toleranzen in das äußere sichtbare Gesamtbild des Fahrzeugs eingegliedert werden. Die genaue relative Endlage zwischen der Beleuchtungsvorrichtung und dem Strukturteil, beispielsweise Karosserieteil, ist dabei kaum vorhersehbar. Auch bei von sich aus verwundenen oder mit Herstellungstoleranzen behafteten Strukturteilen ergeben sich entsprechende Schwierigkeiten. Dies kann durch den beweglich an dem Justageabschnitt gelagerten Anlageabschnitt ausgeglichen werden, so dass die Stützfläche des Justageelements immer sicher und flächig an dem Strukturteil anliegt. Über den Justageabschnitt ist ein Abstand zwischen dem Strukturteil der Beleuchtungsvorrichtung vorteilhaft flexibel, sicher und genau einstellbar. So ist es beispielsweise möglich, die Stützfläche des Anlageabschnitts des Justageelements zunächst unter Vorspannung an dem Strukturteil zum Anliegen zu bringen und dann den Justageabschnitt einzustellen und so beispielsweise die Länge des Justageelements zu verändern, um den gewünschten Justagezustand zwischen Beleuchtungsvorrichtung und Strukturteil herzustellen. Somit ermöglicht das Justageelement eine Einstellung von Position und Orientierung (umfassend Abstand und Winkelverdrehung) der Beleuchtungsvorrichtung relativ zu dem Strukturteil beziehungsweise Karosserieteil.

In bevorzugter Ausgestaltung der Erfindung ist vorgesehen, dass die Beleuchtungsanordnung weiterhin die folgenden Merkmale umfasst: die Beleuchtungsvorrichtung, die in einem Aufnahmeabschnitt einer Oberfläche des Fahrzeugs anordenbar ist; eine Lagerung, über welche die Beleuchtungsvorrichtung in wenigstens einem Freiheitsgrad beweglich an dem Fahrzeug gelagert ist und zumindest abschnittsweise in Richtung der Oberfläche des Fahrzeugs oder von dieser hinweg verlagerbar ist; sowie das Justageelement, dessen Justageabschnitt mit der Beleuchtungsvorrichtung verbunden ist und dessen Stützfläche an dem Strukturteil des Fahrzeugs anlegbar ist.

Die Oberfläche des Fahrzeugs ist, mit anderen Worten ausgedrückt, eine Hüllfläche, welche das Fahrzeug zu seinem Umweltsystem abgrenzt. Diese Hüllfläche kann rein beispielhaft durch Karosserieelemente, Scheiben und sonstige Bauteile und Baugruppen gebildet werden, die das Fahrzeug zu seinem Umweltsystem abgrenzen. Dementsprechend bezeichnet der Begriff des Aufnahmeabschnitts die Oberfläche, die für die Anordnung eines bestimmten Bauteils oder einer bestimmten Baugruppe vorgesehen ist, so dass diese die Oberfläche des Fahrzeugs in dem Aufnahmeabschnitt vervollständigt. Solch eine Baugruppe ist im Sinne der Erfindung insbesondere eine Beleuchtungsvorrichtung. Beleuchtungsvorrichtungen können im Sinne der Erfindung Frontscheinwerfer, Rückleuchten oder sonstige dem Fachmann bekannte Beleuchtungsvorrichtungen sein. Das Strukturteil des Fahrzeugs liegt wenigstens abschnittsweise unterhalb der Oberfläche des Fahrzeugs. Abschnittsweise kann das Strukturteil auch die Oberfläche des Fahrzeugs bilden. Der Begriff Strukturteil impliziert auch Strukturen, die aus mehreren Teilen bestehen. Das Strukturteil ist bevorzugt ein Karosserieteil des Fahrzeugs, welches in dem Aufnahmeabschnitt der Oberfläche sichtbar ist, solange die Beleuchtungsvorrichtung noch nicht in dem Aufnahmeabschnitt angeordnet ist. Im Zusammenhang mit der vorliegenden Erfindung kann das Strukturteil auch der Halterung der Beleuchtungsvorrichtung dienen. Die Beleuchtungsvorrichtung kann aber auch an dem Strukturteil positioniert sein und an anderer Stelle an dem Fahrzeug befestigt sein.

Die Beleuchtungsvorrichtung ist über die Lagerung an dem Fahrzeug befestigt und dabei in wenigstens einem Freiheitsgrad beweglich. Die Lagerung kann beispielsweise eine schwenkbare Gelenkverbindung sein. In diesem Fall wäre die Beleuchtungsvorrichtung wenigstens in einem rotatorischen Freiheitsgrad um die Lagerung schwenkbar. Die Lagerung kann aber auch eine Steckverbindung sein, die beispielsweise über Bolzen oder Stifte eine translatorische Verlagerung der Beleuchtungsvorrichtung ermöglicht. Verlagerbarkeit der Beleuchtungsvorrichtung in Richtung der Oberfläche des Fahrzeugs bedeutet, dass die Beleuchtungsvorrichtung auf einen hinter der Oberfläche liegenden Bereich zubewegt wird.

Dies kann beispielsweise ein Innenraum des Fahrzeugs sein. Verlagerung der Beleuchtungsvorrichtung von der Oberfläche des Fahrzeugs hinweg bedeutet hingegen, dass die Beleuchtungsvorrichtung von dem hinter der Oberfläche liegenden Bereich weiter entfernt wird. Neben dem Innenraum des Fahrzeugs kann dies rein beispielhaft auch das Strukturteil wie beispielsweise das Karosserieteil sein.

In bevorzugter Ausgestaltung der Erfindung ist vorgesehen, dass die Beleuchtungsanordnung ein Energiespeicherelement umfasst, welches ausgebildet ist, eine in Richtung der Oberfläche des Fahrzeugs wirkende Vorspannkraft auf die Beleuchtungsvorrichtung aufzubringen.

Das Energiespeicherelement kann rein exemplarisch eine Feder oder eine Drehfeder sein. Im Falle einer Drehfeder kann anstelle des Begriffs "Vorspannkraft" auch von einem "Vorspannmoment" gesprochen werden. Eine genaue begriffliche Differenzierung zwischen Vorspannkraft und Vorspannmoment erübrigt sich jedoch. Im Zusammenhang mit der vorliegenden Erfindung ist lediglich ausschlaggebend, dass mit dem Energiespeicherelement bewirkt werden kann, dass die Vorspannkraft die Beleuchtungsvorrichtung insgesamt oder lokal in Richtung der Oberfläche des Fahrzeugs beschleunigt. So tritt jedes auf die Beleuchtungsvorrichtung aufgebrachte Vorspannmoment über einen gewissen Hebelarm an der Beleuchtungsvorrichtung stets wieder als lokale Vorspannkraft in Erscheinung. Über das Justageelement ist die Vorspannkraft auf das Strukturteil übertragbar. Somit ergibt sich ein geschlossener Kraftfluss, über Energiespeicherelement, Lagerung, Beleuchtungsvorrichtung, Justageelement das Strukturteil und über dieses oder gegebenenfalls über weitere Bereiche des Fahrzeugs zurück zu dem Energiespeicherelement.

Dies bietet den Vorteil, dass das Justageelement permanent in einer Position gehalten werden kann, in der die Stützfläche an dem Strukturteil anliegt. In diesem Zustand lässt sich das Justageelement besonders gut einstellen.

Ein dritter Aspekt der vorliegenden Erfindung betrifft ein Verfahren zu Montage einer Beleuchtungsvorrichtung in ein Fahrzeug, wenigstens umfassend die Schritte:
a) Vormontage einer Beleuchtungsanordnung für ein Fahrzeug gemäß der vorliegenden Erfindung;
b) Anlegen einer Stützfläche eines Anlageabschnitts eines erfindungsgemäßen Justageelements der Beleuchtungsanordnung an ein Strukturteil des Fahrzeugs; und
c) Einstellung des Justageabschnitts.

Die Reihenfolge der Schritte b und c kann beliebig gewählt werden.

Das erfindungsgemäße Verfahren bietet den Vorteil, dass die Beleuchtungsvorrichtung einfach, schnell und sicher an das Fahrzeug montiert werden kann.

Ein weiterer Aspekt der vorliegenden Erfindung betrifft ein Kraftfahrzeug, umfassend wenigstens eine erfindungsgemäße Beleuchtungsanordnung.

Ein derartiges Kraftfahrzeug bietet den Vorteil, dass es ein besonders sauberes und gleichmäßiges äußeres Erscheinungsbild aufweist. Insbesondere Spaltmaße zwischen den die Oberfläche des Kraftfahrzeugs bildenden Teilen und Baugruppen lassen sich besonders gut mit der erfindungsgemäßen Beleuchtungsanordnung einstellen. Ferner wird die Qualität des erfindungsgemäßen Kraftfahrzeugs signifikant erhöht. Korrosion ist im Kraftfahrzeugbereich eines der Hauptprobleme in der Betriebsphase. Durch die erfindungsgemäße Beleuchtungsanordnung wird eine Schwachstelle konventioneller Kraftfahrzeuge bei dem erfindungsgemäßen Kraftfahrzeug eliminiert.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen näher erläutert. Es zeigen:
- Figur 1: eine schematische Darstellung eines erfindungsgemäßen Justageelements in einer bevorzugten Ausführungsform;
- Figuren 2 bis 4: eine schematische Darstellung einer erfindungsgemäßen Beleuchtungsanordnung für ein Fahrzeug in einer bevorzugten Ausführungsform;
- Figur 5: eine schematische Darstellung eines erfindungsgemäßen Verfahrens zu Montage einer Beleuchtungsvorrichtung in ein Fahrzeug in einer bevorzugten Ausführungsform und
- Figur 6: eine schematische Darstellung eines erfindungsgemäßen Kraftfahrzeugs in einer bevorzugten Ausführungsform.

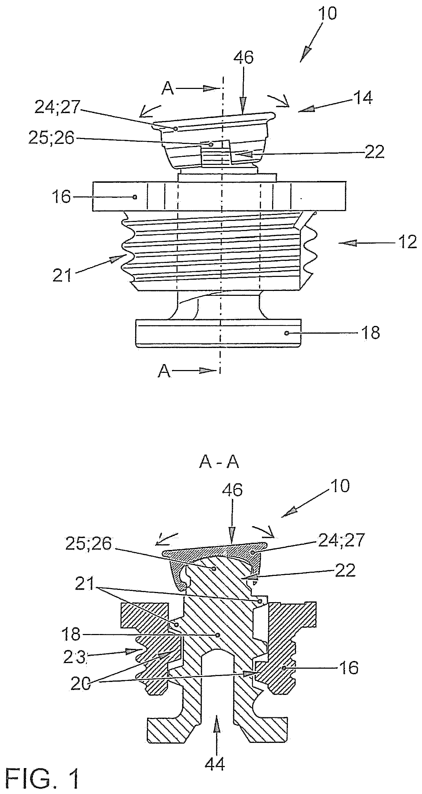

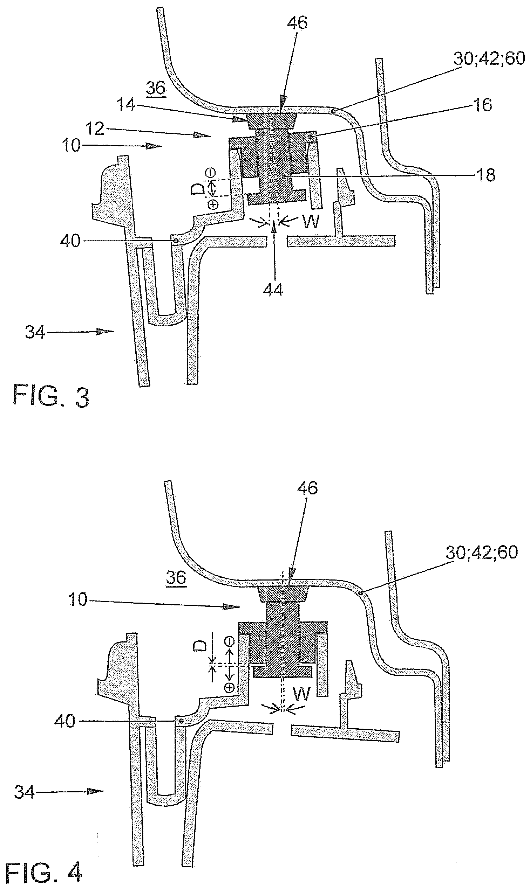

Figur 1 zeigt ein erfindungsgemäßes Justageelement 10 in einer bevorzugten Ausführungsform. Das Justageelement 10 umfasst einen Justageabschnitt 12 und einen gegenüber dem Justageabschnitt 12 beweglichen Anlageabschnitt 14 mit einer Stützfläche 46. Dadurch, dass der Anlageabschnitt 14 beweglich gegenüber dem Justageabschnitt 12 ist, vermag die Stützfläche 46 unterschiedliche Winkelbeziehungen gegenüber einer Längsachse des Justageabschnitts 12 einzunehmen. Diese Längsachse entspricht in Figur 1 der Schnittlinie A-A. Diese Möglichkeit der Stützfläche 46, gegenüber einer Längsachse des Justageabschnitts 12 unterschiedliche Winkelbeziehungen einzunehmen, kann auch als Verschwenkbarkeit der Stützfläche 46 gegenüber dem Justageabschnitt 12 betrachtet werden. Betrachtet man hierzu beispielsweise Figur 4, so wird deutlich, dass diese Winkelbeziehungen, die die Stützfläche 46 gegenüber einer Längsachse des Justageabschnitts 12 einzunehmen vermag, dem Ausgleich einer unerwünschten Winkelverstellung W dient (Näheres in der weiter unten folgenden Beschreibung).

Der Justageabschnitt 12 umfasst eine Hülse 16 und einen justierbaren Stützkörper 18. Der justierbaren Stützkörper 18 ist gegenüber der Hülse 16 längsverstellbar. Zu diesem Zweck weist die Hülse 16 ein Innengewinde 20 auf und der justierbaren Stützkörper 18 weist ein Außengewinde 21 auf. Die Hülse 16 und der justierbare Stützkörper 18 bilden somit eine Art Schraubverbindung. Das Justageelement 10 ist justierbar, indem der justierbare Stützkörper 18 in die Hülse 16 hineingeschraubt oder aus dieser herausgeschraubt wird. Zu diesem Zweck ist eine entsprechende Werkzeugaufnahme 44 vorgesehen. Der Anlageabschnitt 14 ist über eine Gelenkverbindung 22 an dem Justageabschnitt 12 beweglich gelagert. Die Gelenkverbindung umfasst einen gleitfähigen Gelenkkörper 24 und eine Gelenkkörperaufnahme 26. Der gleitfähige Gelenkkörper 24 ist in diesem Ausführungsbeispiel als Gelenkpfanne 27 ausgeführt und die Gelenkkörperaufnahme 26 ist als Gelenkkopf 25 ausgebildet. Die Gelenkpfanne 27 ist Bestandteil des Anlageabschnitts 14. Die Gelenkpfanne 27 ist auf der Gelenkkopf 25 frei verschiebbar und wird von dieser über eine Klippverbindung gehalten. Die freie Verschiebbarkeit ist lediglich dadurch begrenzt, dass die Gelenkpfanne 27 gegenüber der Gelenkkopf 25 sowie umgekehrt eine Störkontur darstellt. Der Anlageabschnitt 14 weist im Bereich des gleitfähigen Gelenkkörpers 24 beziehungsweise der Gelenkpfanne 27 eine Stützfläche 46 auf. Diese ist an einem hier nicht dargestellten Strukturteil 42 eines Fahrzeugs anlegbar (vergleiche Figuren 3-5). Über ein Außengewinde 23 ist die Hülse 16 mit einem hier nicht dargestellten Anbauteil 50 verbindbar (vergleiche Figuren 3-5).

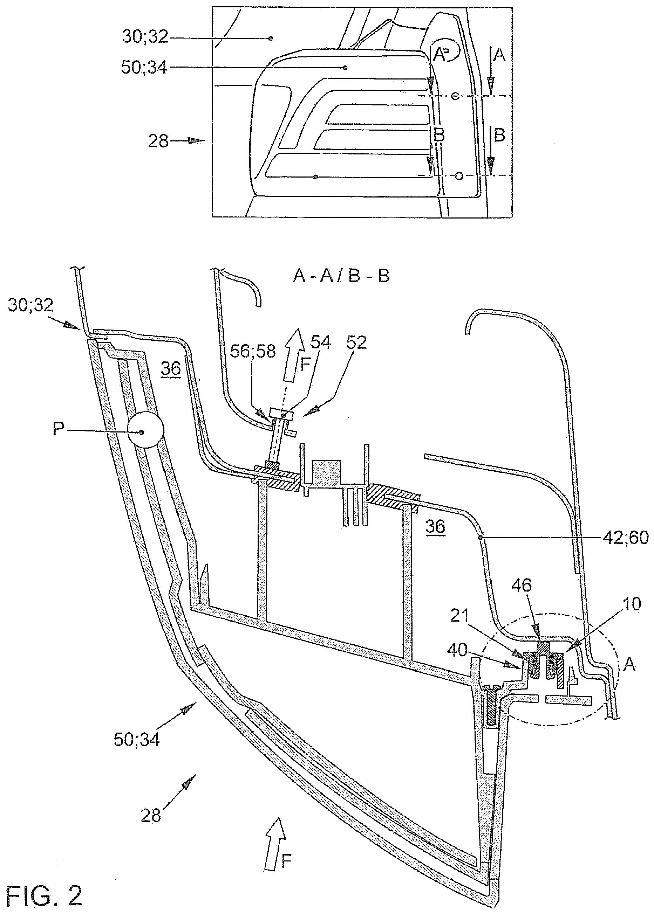

Figur 2 zeigt eine schematische Darstellung einer erfindungsgemäßen Beleuchtungsanordnung 28 für ein Fahrzeug in einer bevorzugten Ausführungsform. Die Beleuchtungsanordnung 28 umfasst das Justageelement 10, wie in Figur 1 dargestellt. Die in Figur 1 verwendeten Bezugszeichen gelten hier entsprechend auch für Figur 2. Der untere Teil der Figur 2 zeigt eine Schnittansicht der Beleuchtungsanordnung 28. Der Schnittverlauf geht aus dem oberen Teil der Figur 2 hervor. Dort sind zwei Schnittlinien A und B gekennzeichnet. Die zugehörigen Schnittansichten A-A und B-B sind identisch und somit im unteren Teil der Figur 2 einmal dargestellt.

Angedeutet ist dort eine Oberfläche 30 eines Fahrzeugs, hier eines Kraftfahrzeugs 32. Die Beleuchtungsanordnung 28 umfasst als Anbauteil 50 eine Beleuchtungsvorrichtung 34. Diese ist in diesem Ausführungsbeispiel eine Rückleuchte. Die Beleuchtungsvorrichtung 34 ist in einem Aufnahmeabschnitt 36 der Oberfläche 30 angeordnet. Die Beleuchtungsanordnung 28 umfasst weiterhin eine prinziphaft Lagerung 52, mit der die Beleuchtungsvorrichtung 34 in einem oder mehreren Freiheitsgraden verlagerbar an dem Kraftfahrzeug 32 befestigt ist. In diesem Ausführungsbeispiel umfasst die Lagerung 52 eine Stiftschraube 54, die einerseits an dem Kraftfahrzeug 32 und andererseits an der Beleuchtungsvorrichtung 34 befestigt ist. Weiterhin ist ein Energiespeicherelement 56 vorgesehen. In diesem Ausführungsbeispiel handelt es sich dabei um eine Feder 58, die auf der Stiftschraube 54 angeordnet ist. Somit ergibt sich eine auf die Beleuchtungsvorrichtung 34 und in Richtung des Kraftfahrzeugs 34 wirkende Vorspannkraft F.

Das Justageelement 10 ist in diesem Ausführungsbeispiel über das Außengewinde 23 in ein Gehäuse 40 der Beleuchtungsvorrichtung 34 eingeschraubt. Durch das Justageelement 10 wird die Beleuchtungsvorrichtung 34 entgegen der Vorspannkraft F gegen das Strukturteil 42 des Kraftfahrzeugs 34 abgestützt. Das Strukturteil 42 ist hier ein Karosserieteil 60. Durch die Wechselwirkung der Vorspannkraft F mit der Stützwirkung des Justageelements 10 kann es zu einer unerwünschten Winkelverstellung W (vergleiche Figuren 3, 4) der Beleuchtungsvorrichtung 34 relativ zu dem Kraftfahrzeug 32 kommen. Veranschaulicht ist dies vorliegend anhand eines Drehpunkts P, dessen Lage je nach Ausgestaltung der konkreten Beleuchtungsanordnung 28 variieren kann. Der Drehpunkt P ist hier somit rein exemplarisch dargestellt. Eine resultierende Verlagerung der Beleuchtungsvorrichtung 34 entspricht in diesem Ausführungsbeispiel einer Verschwenkung der Beleuchtungsvorrichtung 34 um den Drehpunkt P. Die weitere Erklärung erfolgt anhand der Figuren 3 und 4. Diese zeigen den Detailbereich A aus Figur 2.

Wie in Figur 3 erkennbar, liegt die Stützfläche 46 des Anlageabschnitts 14 des Justageelements 10 flächig an dem Karosserieteil 60 an. Deutlich zu erkennen ist, dass durch die Verschwenkung der Beleuchtungsvorrichtung 34 um den Drehpunkt P eine Winkelversstellung W entsteht. Dieser Winkelverstellung W ist durch das Justageelement 10 ausgleichbar, da der Anlageabschnitt 14 beweglich an dem Justageabschnitt 12 gelagert ist. Somit liegt die Stützfläche 46 stets flächig an dem Karosserieteil 60 an. Die Winkelverstellung W kann auch ohne Verschwenkung der Beleuchtungsvorrichtung 34 um den Drehpunkt P auftreten, beispielsweise dann, wenn das Strukturteils 42 eine räumlich verwundene Gestalt aufweist oder auf Grund von unvermeidbaren Form- und Lageabweichungen in der Fertigung und Montage.

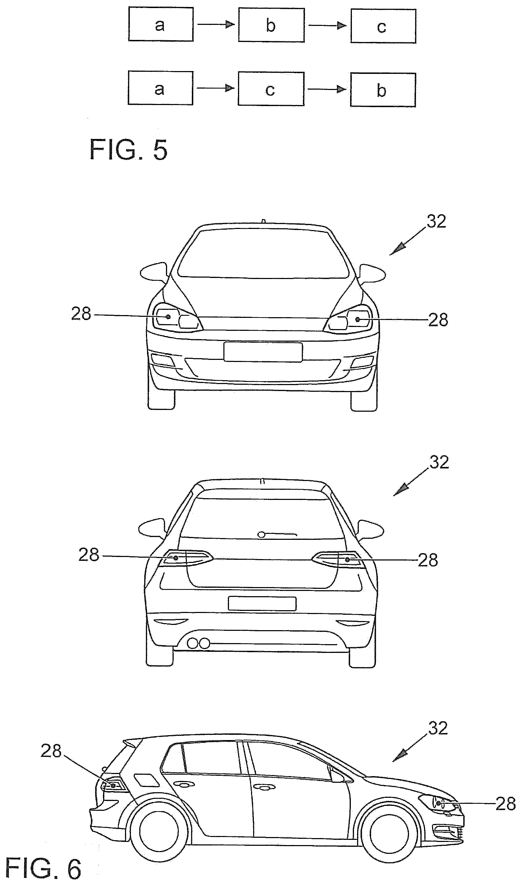

Ferner ist Figur 3 erkennbar ist, dass das Justageelement 10 entlang eines Justagewegs D verstellbar ist. Die Verstellung wird erreicht, indem der justierbare Stützkörper 18 in die Hülse 16 hineingeschraubt oder herausgeschraubt wird. Die kann mit einem geeigneten Drehwerkzeug über die Werkzeugaufnahme 44 erfolgen. Eine Verstellung des Justageelements 10 in +d bewirkt im Bereich des Justageelements 10 eine Verlagerung der Beleuchtungsvorrichtung 34 hin zu dem Karosserieteil 60. Eine Verstellung des Justageelements 10 in -d bewirkt entsprechend eine Verlagerung weg von dem Karosserieteil 60. Dies entspricht einer abschnittsweisen Verlagerung der Beleuchtungsvorrichtung 34 in Richtung der Oberfläche 30 des Kraftfahrzeugs 32 beziehungsweise von dieser hinweg. Angemerkt sei, dass zwar nach der Montage die Beleuchtungsvorrichtung 34 ein Teil der Oberfläche 30 des Kraftfahrzeugs 32 geworden ist, dies wird aber für die Justage selbst noch nicht angenommen, so dass hier das Karosserieteil 60 Teil der Oberfläche 30 ist. In dem in Figur 3 gezeigten Zustand ist die Beleuchtungsvorrichtung 34 in Richtung der Oberfläche 30 des Kraftfahrzeugs 32 bis hin zu einem Totpunkt in +d verlagert. In dem vorliegenden Ausführungsbeispiel steht ein Justageweg D von insgesamt 4 mm zur Verfügung. Figur 5 ist weitreichend identisch mit Figur 3. Der wesentliche Unterschied zu Figur 3 ist, dass die Beleuchtungsvorrichtung 34 hier von der Oberfläche 30 des Kraftfahrzeugs 32 entlang des Justagewegs D bis zu einem Totpunkt in -d hinweg verlagert ist. Hierbei tritt eine Winkelverstellung W in umgekehrter Richtung auf.

Figur 5 zeigt eine schematische Darstellung eines erfindungsgemäßen Verfahrens zu Montage einer Beleuchtungsvorrichtung 34 in einem Fahrzeug in einer bevorzugten Ausführungsform. Das Verfahren zu Montage der Beleuchtungsvorrichtung 34 umfasst einen ersten Schritt a. Dabei erfolgt eine Vormontage einer Beleuchtungsanordnung 28 für ein Fahrzeug. In dem vorliegenden Ausführungsbeispiel handelt es sich dabei um eine Beleuchtungsanordnung 28, wie sie in den Figuren 2 bis 4 beschrieben ist. Somit wird hier zur Verdeutlichung des Sachverhalts auch auf die Bezugszeichen der Figuren 1 bis 4 zurückgegriffen. Der obere Teil der Figur 5 beschreibt nun eine erste Variante des Verfahrens. Dabei wird in einem zweiten Schritt b die Stützfläche 46 des Anlageabschnitts 14 des erfindungsgemäßen Justageelements 10 an dem Strukturteil 42 des Fahrzeugs angelegt. Hierbei handelt es sich in diesem Ausführungsbeispiel um das Kraftfahrzeug 32. In einem dritten Schritt c wird dann der Justageabschnitt 12 des Justageelements 10 eingestellt. Alternativ kann der Schritt c auch vor dem Schritt b erfolgen, wie im unteren Teil der Figur 5 dargestellt.

Figur 6 zeigt eine schematische Darstellung eines erfindungsgemäßen Kraftfahrzeugs in einer bevorzugten Ausführungsform. Der obere Teil der Figur 6 zeigt das erfindungsgemäße Kraftfahrzeug 32 in einer Frontansicht, der mittlere Teil der Figur 6 zeigt das Kraftfahrzeug 32 in einer Rückansicht und der untere Teil der Figur 6 zeigt das Kraftfahrzeug 32 in einer seitlichen Ansicht. Die erfindungsgemäße Beleuchtungsanordnung 28 kann beispielsweise im Bereich eines oder mehrerer Frontscheinwerfer oder Rücklichter des Kraftfahrzeugs 32 vorgesehen sein. Die Beleuchtungsanordnung 28 lässt sich aber grundsätzlich in Bezug auf beliebige Beleuchtungsvorrichtungen oder auch andere Anbauteile 50 vorsehen, die sich sowohl im Inneren als auch an der äußeren Oberfläche 30 des Kraftfahrzeugs 32 befinden können.

### Bezugszeichenliste

- 10: Justageelement
- 12: Justageabschnitt
- 14: Anlageabschnitt
- 16: äußerer Abschnitt
- 18: innerer Abschnitt
- 20: Innengewinde
- 21: Außengewinde
- 22: Gelenkverbindung
- 23: Außengewinde
- 24: Gelenkkörper
- 25: Gelenkkopf
- 26: Gelenkkörperaufnahme
- 27: Gelenkpfanne
- 28: Beleuchtungsanordnung
- 30: Oberfläche
- 32: Kraftfahrzeug
- 34: Beleuchtungsvorrichtung
- 36: Aufnahmeabschnitt
- 40: Gehäuse
- 42: Strukturteil
- 44: Werkzeugaufnahme
- 46: Stützfläche
- 48: formelastische Verbindung
- 50: Anbauteil
- 52: Lagerung
- 54: Stiftschraube
- 56: Energiespeicherelement
- 58: Feeder
- 60: Karosserieteil
- D: Justageweg
- F: Vorspannkraft
- P: Drehpunkt
- W: Winkelverstellung

## Patentansprüche

1. Justageelement (10) zum Positionieren eines Anbauteils (50) an einem Strukturteil (42) eines Fahrzeugs mit einem Justageabschnitt (12), der mit dem Anbauteil (50) verbindbar ist, sowie einem Anlageabschnitt (14), wobei der Anlageabschnitt (14) beweglich an dem Justageabschnitt (12) gelagert ist und eine Stützfläche (46) aufweist, die an dem Strukturteil (42) des Fahrzeugs anlegbar ist, und der Anlageabschnitt (14) über eine Gelenkverbindung (22) an dem Justageabschnitt (12) befestigt ist, wobei eine relative Ausrichtung zwischen Justageelement (10) und Strukturteil (42) unerheblich ist, wobei der Anlageabschnitt (14) derart beweglich an dem Justageabschnitt (12) gelagert ist, dass die Stützfläche (46) gegenüber dem Justageabschnitt (12) verschwenkbar ist, wobei der Justageabschnitt (12) eine mit dem Anbauteil (50) verbindbare Hülse (16) und einen gegenüber der Hülse (16) justierbaren Stützkörper (18) umfasst, an dem der Anlageabschnitt (14) gelagert ist und die Hülse (16) ein Innengewinde (20) aufweist und der Stützkörper (18) ein Außengewinde (21) aufweist, und **dadurch gekennzeichnet, dass** die Hülse (16) ein Außengewinde (23) aufweist, über das die Hülse (16) formschlüssig und kraftschlüssig mit dem Anbauteil (50) verbindbar ausgebildet ist.

2. Justageelement (10) nach Anspruch 1, **dadurch gekennzeichnet, dass** die Gelenkverbindung (22) eine Gelenkkörperaufnahme (26) und einen dazu komplementären gleitfähigen Gelenkkörper (24) umfasst.

3. Beleuchtungsanordnung (28) für ein Fahrzeug, umfassend wenigstens ein Justageelement (10) nach einem der Ansprüche 1 oder 2.

4. Beleuchtungsanordnung (28) nach Anspruch 3, weiterhin umfassend:
- eine Beleuchtungsvorrichtung (34), die in einem Aufnahmeabschnitt (36) einer Oberfläche (30) des Fahrzeugs anordenbar ist;
- eine Lagerung (52), über welche die Beleuchtungsvorrichtung (34) in wenigstens einem Freiheitsgrad beweglich an dem Fahrzeug gelagert ist und zumindest abschnittsweise in Richtung der Oberfläche (30) des Fahrzeugs oder von dieser hinweg verlagerbar ist; und in der
- ein Justageabschnitt (12) des Justageelements (10) mit der Beleuchtungsvorrichtung (34) verbunden ist und eine Stützfläche (46) des Justageabschnitts (14) an ein Strukturteil (42) des Fahrzeugs anlegbar ist.

5. Verfahren zu Montage einer Beleuchtungsvorrichtung (34) in einem Fahrzeug, wenigstens umfassend die Schritte:
a) Vormontage einer Beleuchtungsanordnung (28) für ein Fahrzeug nach Anspruch 3 oder 4;
b) Anlegen einer Stützfläche (46) eines Anlageabschnitt (14) eines Justageelements (10) der Beleuchtungsanordnung (28) an ein Strukturteil (42) des Fahrzeugs; und
c) Einstellung des Justageabschnitts (12).

6. Kraftfahrzeug (32), umfassend wenigstens eine Beleuchtungsanordnung (28) nach Anspruch 3 oder 4.

## Claims

1. Adjustment element (10) for positioning an attachment part (50) on a structural part (42) of a vehicle, the adjustment element comprising an adjustment portion (12) which can be connected to the attachment part (50), and a placement portion (14), wherein the placement portion (14) is movably mounted on the adjustment portion (12) and has a support surface (46) which can be placed on the structural part (42) of the vehicle, and the placement portion (14) is fastened to the adjustment portion (12) via a joint connection (22), wherein a relative alignment between the adjustment element (10) and the structural part (42) is irrelevant, wherein the placement portion (14) is movably mounted on the adjustment portion (12) such that the support surface (46) can be pivoted with respect to the adjustment portion (12), wherein the adjustment portion (12) comprises a sleeve (16) which can be connected to the attachment part (50) and a support body (18) which can be adjusted with respect to the sleeve (16), on which support body the placement portion (14) is mounted, and the sleeve (16) has an internal thread (20) and the support body (18) has an external thread (21), and **characterized in that** the sleeve (16) has an external thread (23) by means of which the sleeve (16) can be connected to the attachment part (50) in a form-fitting and force-fitting manner.

2. Adjustment element (10) according to claim 1, **characterized in that** the joint connection (22) comprises a joint body receptacle (26) and a slidable joint body (24) complementary thereto.

3. Lighting assembly (28) for a vehicle, comprising at least one adjustment element (10) according to either of claims 1 or 2.

4. Lighting assembly (28) according to claim 3, further comprising:
- a lighting device (34) which can be arranged in a receiving portion (36) of a surface (30) of the vehicle;
- a mount (52) by means of which the lighting device (34) is movably mounted, having at least one degree of freedom, on the vehicle and by means of which the lighting device is movable at least in portions toward or away from the surface (30) of the vehicle; and in which lighting assembly
- an adjustment portion (12) of the adjustment element (10) is connected to the lighting device (34) and a support surface (46) of the adjustment portion (14) can be placed on a structural part (42) of the vehicle.

5. Method for installing a lighting device (34) in a vehicle, comprising at least the steps of:
a) pre-installing a lighting assembly (28) for a vehicle according to claim 3 or claim 4;
b) placing a support surface (46) of a placement portion (14) of an adjustment element (10) of the lighting assembly (28) on a structural part (42) of the vehicle; and
c) setting the adjustment portion (12).

6. Motor vehicle (32) comprising at least one lighting assembly (28) according to claim 3 or claim 4.

## Revendications

1. Élément d'ajustement (10) pour le positionnement d'une pièce rapportée (50) sur une partie structurelle (42) d'un véhicule, comportant une section d'ajustement (12) qui peut être reliée à la pièce rapportée (50), ainsi qu'une section d'appui (14), dans lequel la section d'appui (14) est montée mobile sur la section d'ajustement (12) et présente une surface de soutien (46) qui peut s'appuyer contre la partie structurelle (42) du véhicule, et la section d'appui (14) est fixée à la section d'ajustement (12) par l'intermédiaire d'une liaison articulée (22), dans lequel une orientation relative entre l'élément d'ajustement (10) et la partie structurelle (42) est insignifiante, dans lequel la section d'appui (14) est montée mobile sur la section d'ajustement (12) de telle sorte que la surface de soutien (46) peut pivoter par rapport à la section d'ajustement (12), dans lequel la section d'ajustement (12) comprend un manchon (16) pouvant être relié à la pièce rapportée (50) et un corps de soutien (18) ajustable par rapport au manchon (16), corps de soutien sur lequel la section d'appui (14) est montée et le manchon (16) présente un filetage intérieur (20) et le corps de soutien (18) présente un filetage extérieur (21), et **caractérisé en ce que** le manchon (16) présente un filetage extérieur (23) par l'intermédiaire duquel le manchon (16) est réalisé de manière à pouvoir être relié par complémentarité de forme et par adhérence à la pièce rapportée (50).

2. Élément d'ajustement (10) selon la revendication 1, **caractérisé en ce que** la liaison articulée (22) comprend un logement pour corps d'articulation (26) et un corps d'articulation (24) coulissant complémentaire à celui-ci.

3. Agencement d'éclairage (28) pour un véhicule, comprenant au moins un élément d'ajustement (10) selon l'une des revendications 1 ou 2.

4. Agencement d'éclairage (28) selon la revendication 3, comprenant en outre :
- un dispositif d'éclairage (34) pouvant être disposé dans une section de réception (36) d'une surface (30) du véhicule ;
- un palier (52) par l'intermédiaire duquel le dispositif d'éclairage (34) est monté mobile sur le véhicule selon au moins un degré de liberté et peut être déplacé au moins dans certaines sections en direction de la surface (30) du véhicule ou en s'éloignant de celle-ci ; et dans lequel
- une section d'ajustement (12) de l'élément d'ajustement (10) est reliée au dispositif d'éclairage (34) et une surface de soutien (46) de la section d'ajustement (14) peut s'appuyer contre une partie structurelle (42) du véhicule.

5. Procédé pour le montage d'un dispositif d'éclairage (34) dans un véhicule, comprenant au moins les étapes consistant à :
a) préassembler un agencement d'éclairage (28) pour un véhicule selon la revendication 3 ou 4 ;
b) faire s'appuyer une surface de soutien (46) d'une section d'appui (14) d'un élément d'ajustement (10) de l'agencement d'éclairage (28) contre une partie structurelle (42) du véhicule ; et
c) régler la section d'ajustement (12).

6. Véhicule automobile (32), comprenant au moins un agencement d'éclairage (28) selon la revendication 3 ou 4.
